(19) Europäisches Patentamt
European Patent Office
Office européen des brevets

(11) Publication number: **0 329 246 B1**

(12) # EUROPEAN PATENT SPECIFICATION

(45) Date of publication of patent specification :
25.09.91 Bulletin 91/39

(51) Int. Cl.⁵: **F16K 24/02, F16K 15/06, F16K 1/46**

(21) Application number: 89200343.5

(22) Date of filing: 14.02.89

(54) Air inlet device for mounting in tap or pipe.

(30) Priority: 15.02.88 NL 8800362

(43) Date of publication of application:
23.08.89 Bulletin 89/34

(45) Publication of the grant of the patent:
25.09.91 Bulletin 91/39

(84) Designated Contracting States:
AT BE CH DE ES FR GB GR IT LI LU NL SE

(56) References cited:
DE-A- 3 044 489
DE-A- 3 113 269
DE-B- 2 720 396
NL-A- 6 915 819
US-A- 2 300 815
US-A- 3 070 120
US-A- 3 286 721

(73) Proprietor: V.S.H. FABRIEKEN N.V.
Oude Amersfoortseweg 99
NL-1212 AA Hilversum (NL)

(72) Inventor: Terpstra, Willem
Graanoogst 5
NL-3755 HN Eemnes (NL)

(74) Representative: Lips, Hendrik Jan George, Ir.
et al
HAAGSCH OCTROOIBUREAU Breitnerlaan
146
NL-2596 HG Den Haag (NL)

## Description

The invention relates to an air inlet device being mountable in a tap or pipe as defined in the preamble of claim 1 and is known by DE-A-3113269.

Such air inlet devices are used there where the danger exists that when a vacuum develops in the pipe contaminated water is sucked into the pipe.

This e.g. can be the case when the pipe is connected to a washing machine or such like device.

In those cases the Water Works order the mounting of an air inlet device. The same holds e.g. also in devices where the possibility exists that a hose connected to a tap or pipe may come to land in a container in which contaminated water is present.

So the air inlet devices have to suit certain requirements and in particular to the requirement of durability, because the devices substantially never will be checked, in particular when such devices are present in private households.

In case of the known air inlet device the sealing ring is present between the valve body and the valve seat so that the total pressure exerted on the valve seat has to be absorbed by the sealing ring.

Under the influence of this pressure, either or not in combination with a raised temperature of the fluid, the sealing ring will no longer satisfy the requirements in course of time.

The object of the invention now is to further develop the generic air inlet device. The invention is defined as outlined in claim 1.

So the load exerted by the valve body on the valve seat, in consequence of the fluid pressure remaining in the pipe, is directly absorbed by the housing and only the unconstrained lying portion of the sealing ring is loaded by the pressure of the fluid and is pressed against the valve seat.

According to the embodiment of the invention the cavity of the valve body in which the related portion of the sealing ring is present, is shaped by two opposite lying surfaces being executed stepwise in such a way that the sealing ring is bent away from its plane and is engaging at least one circumferential edge.

By this a sealing between the sealing ring and the wall or walls of the cavity is obtained in a simple way so that no fluid can flow around the sealing ring also when the sealing ring substantially is not fixedly clamped and some radial play can be present between the axially running walls of the sealing ring and of the cavity in which it is positioned.

According to the invention the valve body mainly is in the shape of a pin with a circumferential collar. In a preferred embodiment a clamping ring being mounted on said pin, the receiving cavity for the sealing ring being shaped by the two opposite lying stepwise executed radial surfaces of the circumferential collar and the clamping ring.

In particular the radial surface of the circumferential collar of the valve body, turned away from the sealing ring, will engage guiding ribs for the pin provided in the housing, in the closed position of the air inlet device.

By this a very simple device is obtained which is easy to mount.

Now the invention is described by means of an embodiment, shown in the drawing, in which :

Fig. 1 shows a section over a tap in which an air inlet device according to the invention is incorporated ;

Fig. 2 shows a portion of Fig. 1 at an enlarged scale with the valve body in two different positions ;

Fig. 3 shows a section over a part according to the line III-III of Fig. 2 ; and

Fig. 4 shows a section over a portion of the device according to the line IV-IV of Fig. 2.

The drawing shows a tap 1, the part 2 of which can be screwed into a connecting piece, not shown. The tap 1 further comprises the control knob 3 and the closing portion 4 being controled by it and which is not further described because it is of a type generally known. Further the tap 1 comprises the spout 5 and a sleeve 7 with internal thread 6 near said spout, said sleeve 7 together with the nipple 8 screwed in it forming the housing 9 of the air inlet device 10. Between the housing portions 7 and 8 the sealing ring 11 is present.

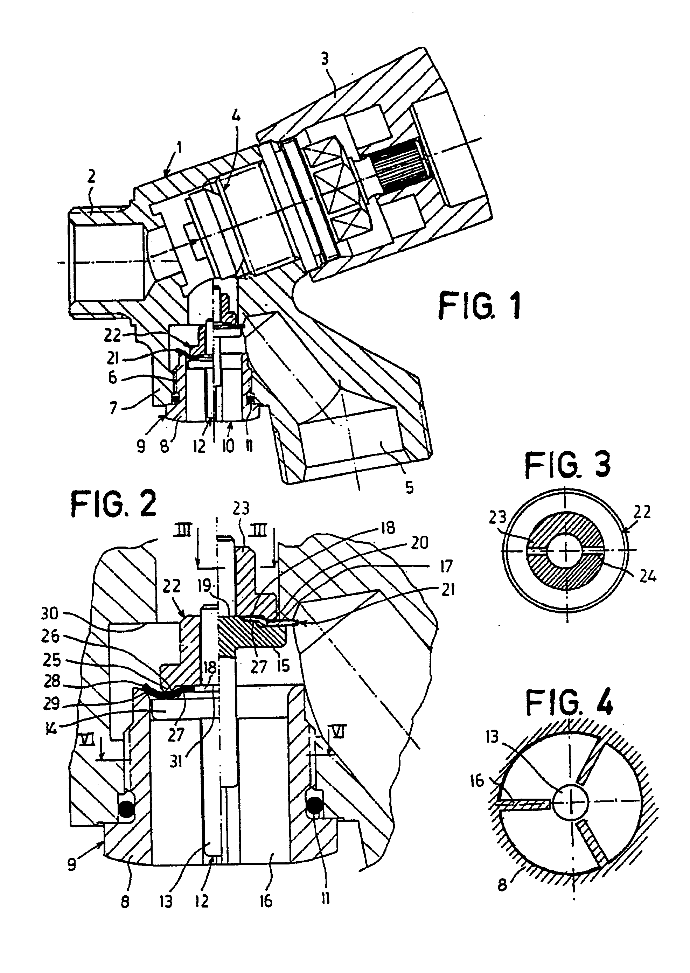

The valve body 12 of the air inlet device 10 comprises a pin 13 with on it a circumferential collar 14, of which one radial surface 15 may engage ribs 16 being provided on the inner wall of the nipple 8 and serving at once for guiding the pin 13. The other radial surface of the circumferential collar 14 is executed stepwise and comprises the portions 17, 18 and 19 from the outside inwards. The inner circumferential edge 20 of the sealing ring 21 comes to lie above the portions 17 and 18, said sealing ring being maintained on its place by means of the clamping ring 22. As in particular appears from Fig. 3 the upper portion 23 of the clamping ring 22 is provided with two slots 24 and the inner diameter of this portion is somewhat smaller than the diameter of the pin 13, so that the sealing ring 21 will be fixed at its place after the clamping ring 22 is mounted on said pin. Further the clamping ring 22 is provided with an outwardly extending ring-shaped portion 25 such that an inward lying circumferential edge 26 is obtained.

The sealing ring 21 has such a thickness that it is not fixedly clamped between the surfaces 17 and 18 of the circumferential collar 14 and of the lower surface 31 of the clamping ring 22, but is only pressed against the edge 26 of the clamping ring 22 and the outer circumferential edge 27 of the surface portion 18 of the circumferential collar 14. By the engagement of the sealing ring 21 against the edges 26 and 27 a sufficient sealing is obtained so that no fluid will flow around the inner circumference of the sealing ring 21. In view of this the inner circumference of the sealing ring 21 will not have to engage the axial running wall between the surface portions 18 and 19. So a good sealing is obtained between the edges 26 and 27 and the sealing ring 21 without a substantial clamping of the sealing ring.

The outer circumferential portion 28 of the sealing ring 21 engages the valve seat 29 in the way as shown in the left portion of Fig. 2, said valve seat forming part of the nipple 8.

Because the circumferential collar 14 engages the ribs 16 only a relatively small force is exerted on the outer circumferential portion 28 of the sealing ring 21 so that the sealing ring will have a very good durability.

In the Figs. 1 and 2 the valve body 12 is shown in two different positions, to wit in the left portion in the position in which the sealing ring 21 is engaging the valve seat 29 and in the right portion in the position in which the valve is lifted after a vacuum has developed in the pipe connected to the tap 1. Now a direct connection is present between the atmosphere and the spout 5 so that no fluid will be sucked into the pipe via the spout 5. For additional safety the outer circumferential edge 28 of the sealing ring 21 may engage the edge 30.

In case of the shown embodiment the sealing ring 21 is pressed against the valve seat 29 under the influence of the weight of the valve body 12, but obviously also use can be made of a spring. This may be the case when e.g. the air inlet device is mounted in an other position than the vertical one. Also the sleeve 7 needs not to form part of a tap but it can be executed such that an independent air inlet device is obtained which may be screwed directly in a pipe or such like.

All these possibilities, however, will be obvious for the expert and need no further elucidation.

## Claims

1. Air inlet device being moutable in a tap (1) or pipe, in particular in a water pipe and such like, said air inlet device comprising a housing (9), a valve body (12) movable in this, an elastic sealing ring (21) and a valve seat (29) at said housing such that in case of positive pressure in the pipe, the elastic sealing ring (21) engages the valve seat (29) and the air inlet device remains closed and that in the event a vacuum developes in the pipe said valve body (12) is lifted from the valve seat (29) to make it possible that air is flowing in from the outside, said elastic sealing ring (21) being connected to the valve body (12) by incorporating the inner circumferential portion of said sealing ring (21) into a corresponding cavity of the valve body (12), said valve body (12) being provided with an abutment (14') which in the closed position of the air inlet device is directly engaging a portion (16) of the housing (9) and said valve body (12) mainly having the shape of a pin (13) with a circumferential collar (14) engaging the inner circumferential portion (20) of said sealing ring (21), characterized in that the cavity of the valve body (12) in which the inner circumferential portion (20) of the sealing ring (21) is received is shaped by two opposite lying surface (17, 18 ; 31) being executed stepwise in such a way that the inner circumferential portion of the sealing ring (21) is bent away from its plane and is engaging at least one circumferential edge (26) provided at the valve body, and that the outer circumferential portion (28) of the sealing ring (21) is unconstrained engaging said valve seat (29).

2. Device according to claim 1, characterized in that one surface (17, 18) of said two surfaces (17, 18 ; 31) being shaped by the circumferential collar (14) of the valve body (12) and the other surface (31) being shaped by a clamping ring (22) mounted on the pin (13) of said valve body (12).

## Patentansprüche

1. In einem Ventil (1) oder Leitung montierbare Lufteinlass-Vorrichting, insbesondere in einer Wasserleitung und derartigen Leitungen, wobei die Lufteinlass-Vorrichtung ein Gehäuse (9), einen darin beweglichen Ventilkörper (12), einen elastischen Dichtungsring (21) und einen Ventilsitz (29) an dem genannten Gehäuse derart umfasst, dass bei positivem Druck in der Leitung der elastische Dichtungsring (21) an dem Ventilsitz (29) anliegt und die Lufteinlass-Vorrichtung verschlossen bleibt und dass bei in der Leitung auftretendem Unterdruck der Ventilkörper (12) von dem Ventilsitz (29) gehoben wird um Zuströmung von Aussenluft zu ermöglichen, wobei der elastische Dichtungsring (21) durch Aufnahme des inneren Umfangsteils des Dichtungsringes (21) in einen entsprechenden Hohlraum des Ventilkörpers (12) mit dem Ventilkörper (12) verbunden ist, der Ventilkörper (12) mit einem Anschlag (14') versehen ist, der in der geschlossenen Stellung der Lufteinlass-Vorrichtung in direkter Berührung mit einem Teil (16) des Gehäuses (9) ist und der Ventilkörper (12) im wesentlichen die Form eines Stiftes (13) mit einem Umfangskragen (14) aufweist, der mit dem inneren Umfangteil (20) des Dichtungsringes (21) in Berührung ist, dadurch gekennzeichnet, dass der Hohlraum des Ventilkörpers (12), in dem sich der zugehörige Teil (20) des Dichtungsrings (21) befindet, durch zwei gegenüberliegende Flächen (17, 18 ; 31) gebildet wird, die derart stufenweise ausgebildet sind, dass der innere Umfangsteil des Dichtungsrings (21) aus seiner Fläche abgebogen wird und an wenigstens einem an dem Ventilkörper vorgesehenen Umfangsrand (26) anliegt, und dass der äussere Umfangsteil (28) des Dichtungsrings (21) frei an dem Ventilsitz (29) anliegt.

2. Vorrichtung nach Anspruch 1, dadurch gekennzeichnet,
dass eine Fläche (17, 18) der genannten zwei Flächen (17, 18 ; 31) durch den Umfangskragen (14) des Ventilkörpers (12) gebildet wird und die andere Fläche (31) durch einen auf dem Stift (13) des Ventilkörpers (12) angeordneten Klemmring (21) gebildet wird.

## Revendications

1. Dispositif d'entrée d'air susceptible d'être monté sur un robinet (1) ou sur un tuyau, en particulier un tuyau d'eau, ou similaire, ledit dispositif d'entrée d'air comprenant un corps (9), un corps de soupape (12) susceptible d'être déplacé dans celui-ci, un joint annulaire élastique (21) et un siège (29) de valve situé sur ledit corps, de façon telle qu'au cas où il existe une pression positive dans le tuyau, le joint annulaire élastique (21) est mis en contact avec le siège de valve (29) et le dispositif d'entrée d'air reste fermé, et qu'au cas où un vide se développe dans le tuyau, ledit corps de soupape est soulevé à partir du siège de valve (29) afin de permettre que de l'air pénètre en provenance de l'extérieur, ledit joint annulaire (21) étant relié au corps (12) de soupape en incorporant la partie circonférentielle intérieure dudit joint annulaire (21) dans une cavité correspondante du corps (12) de soupape, ledit corps (12) de soupape étant muni d'une butée (14') qui, le dispositif d'entrée d'air étant en position de fermeture, est directement en contact avec une partie (16) du corps (9) et ledit corps (12) de soupape ayant généralement la forme d'une aiguille (13) comportant un collet circonférentiel (14) qui est en contact avec la partie circonférentielle intérieure (20) dudit joint annulaire (21),
caractérisé en ce que la cavité du corps (12) de soupape dans laquelle la partie circonférentielle intérieure (20) du joint annulaire (21) est logée, est formée par deux surfaces (17, 18 ; 31) situées en face l'une de l'autre en étant réalisée d'une façon étagée de telle sorte que la partie circonférentielle intérieure du joint annulaire (21) est courbée hors de son plan et est en contact avec au moins un bord circonférentiel ménagé dans le corps de soupape et en ce que la partie circonférentielle extérieure (28) du joint annulaire (21) est en contact sans contrainte avec ledit siège de soupape (29).

2. Dispositif selon la revendication 1,
caractérisé en ce qu'une surface (17, 18) des deux surfaces (17, 18 ; 31) est formée par le collet circonférentiel (14) du corps de soupape (12) et que l'autre surface (31) est formée par un anneau de blocage (22) monté sur la tige (13) dudit corps de soupape (12).

FIG. 1

FIG. 2

FIG. 3

FIG. 4